# EUROPEAN PATENT APPLICATION

(11) **EP 4 797 085 A1**
(43) Date of publication of application: **26.08.2026**
(21) Application number: 24889997.3
(22) Date of filing: 07.05.2024
(51) Int. Cl.: G06F 9/38

(54) **DATA PROCESSING METHOD AND APPARATUS, AND CLUSTER**

(30) Priority: 17.11.2023 CN 202311541722; 16.01.2024 CN 202410065781
(71) Applicant: Huawei Cloud Computing Technologies Co., Ltd., Gui'an New District, Guizhou 550025 (CN)
(72) Inventor: SHOU, Chunbai, Guiyang, Guizhou 550025 (CN); YANG, Xiao, Guiyang, Guizhou 550025 (CN); ZHAO, Jun, Guiyang, Guizhou 550025 (CN)
(74) Representative: Goddar, Heinz J.
(86) International application number: PCT/CN2024/091496
(87) International publication number: WO 2025/102626

(57) **Abstract**

This application provides a data processing method, an apparatus, and a cluster. The method includes: A reading operator reads service data from a data source end of a service; the reading operator identifies, from the service data, data required by computing logic of the service, to obtain data required for computing, where the data required for computing includes first data required by first computing logic; the reading operator sends the data required for computing to a first compute operator, to cause the first compute operator to compute the first data based on the first computing logic to obtain a computational result; and an output operator outputs a processing result of the service to a data target end of the service based on the computational result and the service data. In this method, a data amount of state storage of the compute operator is decreased while normal processing of the service is ensured, thereby reducing memory consumption of the compute operator.

## Description

This application claims priorities to Chinese Patent Application No. 202311541722.3, filed with the China National Intellectual Property Administration on November 17, 2023 and entitled "STREAM COMPUTING METHOD", and to Chinese Patent Application No. 202410065781.6, filed with the China National Intellectual Property Administration on January 16, 2024 and entitled "DATA PROCESSING METHOD, APPARATUS, AND CLUSTER", both of which are incorporated herein by reference in their entireties.

### TECHNICAL FIELD

This application relates to the field of computer technologies, and in particular, to a data processing method, an apparatus, and a cluster.

### BACKGROUND

Stream computing is a computing manner in which data can be processed in real time. Generally, the stream computing can be classified into stateful computing and stateless computing. For the stateful computing, there is a relationship between previous data and current data, and an operator (operator) needs to compute the current data based on the previous data or a previous computational result. Therefore, the operator that performs the stateful computing stores the previous data and the previous computational result as a state (state), so that when receiving new data, the operator computes the new data by using the stored state (that is, the previous data and the previous computational result).

In a related technology, full data is sent to an operator, to cause the operator to perform state storage based on the full data. Data required for computation by the operator is usually only a small part of the full data. Consequently, the state storage based on the full data generates unnecessary storage overheads. In addition, because the state storage is performed in a memory, an excessive amount of state storage data causes large memory consumption of the operator, affecting computing performance of the operator.

### SUMMARY

This application provides a data processing method, an apparatus, and a cluster, so that a data amount of state storage of a compute operator is decreased while normal processing of a service is ensured, thereby reducing memory consumption of the compute operator.

According to a first aspect, a data processing method is provided. The method is applied to a stream computing apparatus, the stream computing apparatus includes a reading operator, a first compute operator, and an output operator, and the first compute operator is configured to perform data computing based on first computing logic of a service. The method includes: The reading operator reads service data from a data source end of the service; the reading operator identifies, from the service data, data required by computing logic of the service, to obtain data required for computing, where the data required for computing includes first data required by the first computing logic; the reading operator sends the data required for computing to the first compute operator, to cause the first compute operator to compute the first data based on the first computing logic to obtain a computational result; and the output operator outputs a processing result of the service to a data target end of the service based on the computational result and the service data.

The compute operator performs state storage based on data received by the compute operator. Generally, data required by computing logic of the compute operator is only a small part of the service data read by the reading operator. In this method, the data required by the computing logic of the compute operator is identified from the service data, and the data required by the computing logic of the compute operator is sent to the compute operator, to cause the compute operator to perform state storage based on the data required by the computing logic of the compute operator. Compared with state storage performed based on the service data, the state storage performed based on the data required by the computing logic greatly decreases a data amount of the state storage, thereby reducing memory consumption of the operator by the state storage. In addition, the data required by the computing logic meets a computing requirement of the compute operator. The output operator may obtain the processing result of the service based on the service data and the computational result that is obtained through the compute operator computing the data required by the computing logic. In other words, when the reading operator sends the data required by the computing logic of the compute operator only to the compute operator, the output operator can obtain the processing result of the service, and service processing is not affected.

In short, according to the method provided in this embodiment of this application, a data amount of state storage of the compute operator can be decreased while normal processing of the service is ensured, thereby reducing memory consumption of the compute operator and ensuring computing performance of the compute operator.

In a possible implementation, the stream computing apparatus corresponds to storage space that is accessed by the reading operator and the output operator. The method further includes:
The reading operator stores data not required for computing into the storage space, where the data not required for computing is data in the service data other than the data required for computing; the output operator reads the data not required for computing from the storage space; and that the output operator outputs the processing result of the service to the data target end based on the computational result and the service data includes: The output operator outputs the processing result to the data target end based on the data not required for computing and the computational result.

The storage space is shared storage space of the reading operator and the output operator. The data not required for computing and the computational result of the compute operator are used by the output operator to obtain the processing result of the service. In this implementation, the reading operator stores the data not required for computing into the shared storage space. When the reading operator does not need to transfer the data not required for computing through an operator (for example, the compute operator) between the reading operator and the output operator, the output operator may obtain the data not required for computing, to obtain the processing result of the service based on the data not required for computing and the computational result of the compute operator.

In a possible implementation, the stream computing apparatus corresponds to storage space that is accessed by the reading operator and the output operator. The method further includes: The reading operator stores the service data into the storage space; and the output operator reads the service data from the storage space.

The storage space is shared storage space of the reading operator and the output operator. The service data and the computational result of the compute operator are used by the output operator to obtain the processing result of the service. In this implementation, the reading operator stores the service data into the shared storage space. When the reading operator does not need to transfer the service data through an operator (for example, the compute operator) between the reading operator and the output operator, the output operator may obtain the data not required for computing, to obtain the processing result of the service based on the data not required for computing and the computational result of the compute operator.

In a possible implementation, the stream computing apparatus includes a second compute operator, the second compute operator is configured to perform data computing based on second computing logic of the service, and in a data stream direction of the service, the second compute operator is located after the first compute operator. The data required for computing further includes second data required by the second computing logic, and the first compute operator is configured to send the second data to the second compute operator, to cause the second compute operator to compute the second data based on the second computing logic.

In this implementation, the compute operator may identify data required by computing logic of a downstream compute operator of the compute operator, and send the data required by the computing logic of the downstream compute operator to the downstream compute operator. This further decreased a data amount of state storage of the downstream compute operator while ensuring a computing requirement of the downstream compute operator, thereby further reducing memory consumption of the downstream compute operator.

In a possible implementation, the service data includes first to-be-concatenated data, a first concatenation key corresponding to the first to-be-concatenated data, second to-be-concatenated data, and a second concatenation key corresponding to the second to-be-concatenated data. The first computing logic includes determining whether the first concatenation key is the same as the second concatenation key. That the reading operator identifies, from the service data, the data required by the computing logic of the service, to obtain the data required for computing, includes: The reading operator identifies, based on the first computing logic, that the first concatenation key and the second concatenation key are the first data. That the output operator outputs the processing result of the service to the data target end of the service based on the computational result and the service data includes: When the computational result indicates that the first concatenation key is the same as the second concatenation key, the output operator concatenates the first to-be-concatenated data and the second to-be-concatenated data to obtain the processing result.

In this implementation, when the compute operator performs data concatenating service, the reading operator only needs to send the concatenation key to the compute operator. This enables the compute operator to perform state storage based on the concatenation key while meeting a computing requirement of the compute operator, thereby decreasing a data amount of the state storage of the compute operator.

In a possible implementation, the service data includes to-be-filtered data and a filter key corresponding to the to-be-filtered data. The first computing logic includes determining whether the filter key meets a preset filter condition. That the reading operator identifies, from the service data, the data required by the computing logic of the service, to obtain the data required for computing, includes: The reading operator identifies, based on the first computing logic, that the filter key is the first data. That the output operator outputs the processing result of the service to the data target end of the service based on the computational result and the service data includes: When the computational result indicates that the filter key meets the preset filter condition, the output operator uses the to-be-filtered data as the processing result.

In this implementation, when the compute operator performs a data filtering and output service, the reading operator only needs to send the filter key to the compute operator. This enables the compute operator to perform state storage based on the filter key while meeting a computing requirement of the compute operator, thereby decreasing a data amount of the state storage of the compute operator.

In a possible implementation, the service data is streaming data including a plurality of data points, and each of the plurality of data points includes at least one piece of data. The reading operator reads different data points of the plurality of data points from the data source end at different moments. That by the reading operator reads the service data from the data source end of the service includes: The reading operator reads a first data point of the plurality of data points at a first moment. That the reading operator identifies, from the service data, the data required by the computing logic of the service, to obtain the data required for computing, includes: The reading operator identifies, based on the first computing logic, that the first data point is the first data.

Each time when data is read, the reading operator may determine whether the data is the data required for computing or the data not required for computing. When the data is the data required for computing, the reading operator sends the data to the compute operator, to cause the compute operator to compute the data in time, thereby ensuring real-time performance of stream computing.

In a possible implementation, that the reading operator reads the service data from the data source end of the service includes: The reading operator reads a second data point of the plurality of data points at a second moment. That when the second data point is data other than the data required by the first computing logic, the output operator outputs the processing result to the data target end of the service based on the computational result and second data includes: The output operator outputs the processing result to the data target end of the service based on the computational result and the second data point.

In a possible implementation, the computing logic of the service is obtained based on a structured query language SQL statement of the service.

In this implementation, the computing logic of the service may be obtained based on the SQL statement of the service, and the computing logic of the service is configured to the reading operator. Therefore, the reading operator may identify, from the service data based on the computing logic of the service, data required by the computing logic of the service.

In a possible implementation, the first compute operator is obtained through orchestration based on an SQL statement of the service.

In this implementation, the computing logic of the service may be obtained based on the SQL of the service, and then an operator that carries the computing logic of the service may be orchestrated based on the computing logic of the service. The first compute operator obtained through orchestration is used to carry the first computing logic of the service, that is, the first compute operator is configured to perform data computing based on the first computing logic, to process the service.

According to a second aspect, a stream computing apparatus is provided. The stream computing apparatus includes a reading operator, a first compute operator, and an output operator, and the first compute operator is configured to perform data computing based on first computing logic of a service. The reading operator is configured to read service data from a data source end of the service. The reading operator is configured to identify, from the service data, data required by computing logic of the service, to obtain data required for computing, where the data required for computing includes first data required by the first computing logic. The reading operator is configured to send the data required for computing to the first compute operator, to cause the first compute operator to compute the first data based on the first computing logic to obtain a computational result. The output operator is configured to output a processing result of the service to a data target end of the service based on the computational result and the service data.

In a possible implementation, the stream computing apparatus corresponds to storage space that is accessed by the reading operator and the output operator. The reading operator is further configured to store data not required for computing into the storage space, where the data not required for computing is data in the service data other than the data required for computing. The output operator is further configured to read the data not required for computing from the storage space. The output operator is further configured to output the processing result to the data target end based on the data not required for computing and the computational result.

In a possible implementation, the stream computing apparatus corresponds to storage space that is accessed by the reading operator and the output operator. The reading operator is further configured to store the service data into the storage space. The output operator is further configured to read the service data from the storage space.

In a possible implementation, the stream computing apparatus includes a second compute operator, the second compute operator is configured to perform data computing based on second computing logic of the service, and in a data stream direction of the service, the second compute operator is located after the first compute operator. The data required for computing further includes second data required by the second computing logic, and the first compute operator is configured to send the second data to the second compute operator, to cause the second compute operator to compute the second data based on the second computing logic.

In a possible implementation, the service data includes first to-be-concatenated data, a first concatenation key corresponding to the first to-be-concatenated data, second to-be-concatenated data, and a second concatenation key corresponding to the second to-be-concatenated data. The first computing logic includes determining whether the first concatenation key is the same as the second concatenation key. The reading operator is configured to identify, based on the first computing logic, that the first concatenation key and the second concatenation key are the first data. When the computational result indicates that the first concatenation key is the same as the second concatenation key, the output operator is configured to concatenate the first to-be-concatenated data and the second to-be-concatenated data to obtain the processing result.

In a possible implementation, the service data includes to-be-filtered data and a filter key corresponding to the to-be-filtered data. The first computing logic includes determining whether the filter key meets a preset filter condition. The reading operator is configured to identify, based on the first computing logic, that the filter key is the first data. When the computational result indicates that the filter key meets the preset filter condition, the output operator is configured to use the to-be-filtered data as the processing result.

In a possible implementation, the service data is streaming data including a plurality of data points, and each of the plurality of data points includes at least one piece of data. The reading operator reads different data points of the plurality of data points from the data source end at different moments. The reading operator is configured to read a first data point of the plurality of data points at a first moment. The reading operator is configured to identify, based on the first computing logic, that the first data point is the first data.

In a possible implementation, the reading operator is configured to read a second data point of the plurality of data points at a second moment. When the second data point is data other than the data required by the first computing logic, the output operator is configured to output the processing result to the data target end of the service based on the computational result and the second data point.

In a possible implementation, the computing logic of the service is obtained based on a structured query language SQL statement of the service.

In a possible implementation, the first compute operator is obtained through orchestration based on an SQL statement of the service.

According to a third aspect, a compute device cluster is provided, including at least one compute device, where each compute device includes a processor and a storage; and a processor of the at least one compute device is configured to execute instructions stored in a storage of the at least one compute device, to cause the compute device cluster to perform the method provided in the first aspect.

According to a fourth aspect, a computer-readable storage medium is provided, including computer program instructions, where when the computer program instructions are executed by a compute device cluster, the compute device cluster performs the method provided in the first aspect.

According to a fifth aspect, a computer program product including instructions is provided, where when the instructions are executed by a computer device cluster, the computer device cluster is caused to perform the method provided in the first aspect.

For beneficial effects of the second aspect to the fifth aspect, refer to the foregoing descriptions of the beneficial effects of the first aspect. Details are not described herein again.

### BRIEF DESCRIPTION OF DRAWINGS

FIG. 1 is a diagram of a system architecture according to an embodiment of this application;
FIG. 2 is a diagram of a compute node cluster according to an embodiment of this application;
FIG. 3 is a diagram of shared storage space according to an embodiment of this application;
FIG. 4 is a flowchart of a data processing method according to an embodiment of this application;
FIG. 5 is a diagram of a structure of a stream computing apparatus according to an embodiment of this application;
FIG. 6 is a diagram of a structure of a compute device according to an embodiment of this application;
FIG. 7 is a diagram of a structure of a compute device cluster according to an embodiment of this application; and
FIG. 8 is a diagram of a structure of a compute device cluster in which a network is used for connection according to an embodiment of this application.

### DESCRIPTION OF EMBODIMENTS

The following describes solutions provided in embodiments of this application with reference to the accompanying drawings. In embodiments of this application, "a plurality of" means two or more, and "a plurality of types" means two or more types. Terms "first", "second", and the like are merely intended to distinguish between similar objects, and are not necessarily used to describe a specific order or a quantity of objects.

To facilitate understanding of the solutions provided in embodiments of this application, technical terms that may be used in embodiments of this application are first described.

Streaming data: The streaming data is also referred to as time series data, which is data generated in a chronological order, that is, data continuously generated over time. The streaming data includes data points generated in a chronological order, where each data point may include at least one piece of data. Different data points are generated at different time. That is, one piece of data or one segment of data may be generated at one time point or in one time period, and the piece of data or the segment of data may be referred to as one data point. Data points generated at a plurality of sequentially adjacent time points or in a plurality of sequentially adjacent time periods form the streaming data. The streaming data usually features a large data amount, a short interval between data points, and continuous arrival of data points.

Stream computing: The stream computing is also referred to as stream computing (stream computing), and the stream computing is used to process data in real time. The stream computing may be a computing model triggered by input data. Each piece of newly input data may be used as an event to trigger the computing model to perform computing.

Stateless computing: The stateless computing is a type of stream computing. In the stateless computing, data is processed separately, and there is no relationship between different data. For example, for stateless computing of "Input value+5", if a current input value (namely, current data) is "10", the input is added by 5 to obtain a computational result of "15".

Stateful computing: The stateful computing is another type of stream computing. There is a relationship between a previous input value and a current input value (that is, previous input data and current input data). The current input value needs to be computed based on the previous input value or a previous computational result. For ease of computing, the previous input value or the previous computational result is stored as a state. Stateful computation of accumulation computation is used as an example. When a 1^{st} input value is set to "5", an accumulation computation result is "5"; when a 2^{nd} input value is set to "100", an accumulation computation result is "5+100=105"; and when a 3^{rd} input value is set to "200", an accumulation computation result is "105+200=305". It can be learned that a previous computational result needs to be used in current computing. Therefore, the previous computational result needs to be stored as a state. Stateful computation of association computation is used as another example. A data source A1 is set to an employee information table, including an employee identifier (identifier, ID), an employee name, and an ID of a department to which an employee belongs, and a data source A2 is set to department information, including an ID of a department and a department name. The association computation is specifically to obtain information, about an employee in a department through an ID of the department, for example, an employee ID, an employee name, and an ID of the department to which the employee belongs. The ID of the department herein is an association field. Computing logic of the association computation is determining whether an association field (that is, the ID of the department) in an input value of the data source A1 is the same as an association field (that is, the ID of the department) in an input value of the data source A2. If the association fields are the same (that is, computational results of the association computation are the same), the information about the employee in the input value of the data source A1 and the information about the employee in the input value of the data source A1 are output. The input value of the data source A1 may be set to "1 (the employee ID), Li Qiang (the employee name), and B10011 (the ID of the department to which the employee belongs)", and the input value of the data source A2 may be set to "B10011 (the ID of the department) and research and development department (the department name)". In this case, an output result is "1, Li Qiang, and research and development department". Because the information about the employee in the data source may change, for example, the department to which the employee belongs changes, previously output information about the employee needs to be changed. In this case, a previous input value and output result need to be searched for. Therefore, the previous input value and input result need to be stored as a state. In addition, data may be duplicate. To ensure accuracy of the output result, deduplication needs to be performed on the previous input value. Therefore, the previous input value also needs to be stored as a state.

Operator: The operator is a data processing unit that carries computing logic, where the operator is a smallest unit that can be used for execution in stream computing. The operator is used to compute related data based on the computing logic carried by the operator. Common operators in a stream computing apparatus include a reading operator, a compute operator, and an output operator. Generally, a stream computing apparatus needs a reading operator, at least one compute operator, and an output operator to execute a service.

Reading operator: The reading operator is also referred to as a source (source) operator, and is an operator that is in a stream computing apparatus and that is configured to read service data from a data source end of a service.

Compute operator: The compute operator is also referred to as a task (task) operator, and is an operator that is in a stream computing apparatus and that is configured to carry computing logic of a service. That is, the compute operator is configured to execute the computing logic of the service.

Output operator: The output operator is also referred to as a sink (sink) operator, and is configured to: obtain a processing result of a service based on a computational result of a compute operator and send the processing result of the service to a data target end of the service, for example, a storage end that is configured to store the processing result of the service.

Data required for computing: The data required for computing refers to data that is in service data and that is required by a compute operator to execute computing logic, that is, a compute object computed by the compute operator based on the computing logic. The data required for computing is also referred to as data required by the computing logic. The service data may be recorded in a data table, the data required for computing may be one or more fields in the data table, and the one or more fields may be referred to as a field required for computing or a compute field. For example, when computing logic of association computing includes determining whether association fields of two to-be-associated tables are the same, data required by the computing logic is the association fields of the two to-be-associated tables. For another example, when computing logic of filter computing includes determining whether a filter field meets a filter condition, data required by the computing logic is the filter field.

Data not required for computing: The data not required for computing refers to data in service data other than data required for computing.

State storage: The state storage means that an operator in stream computing stores data received by the operator and a computational result of the operator as a state. Generally, the operator stores the state in a local memory. That is, the state storage of the operator consumes the memory of the operator.

Embodiments of this application provide a data processing method. In this method, a reading operator identifies, from read service data based on computing logic of a service, data required by the computing logic of the service, to obtain data required for computing. The data required for computing is a part of the service data, and is specifically the data required by the computing logic of the service in the service data. The reading operator sends the data required for computing, rather than the service data, to a compute operator of the service, thereby decreasing an amount of data sent to the compute operator. The compute operator may perform state storage based on the data required for computing, thereby decreasing a data amount of the state storage. The compute operator computes the data required for computing based on the computing logic carried by the compute operator, to obtain a computational result. That is, the data required for computing can meet a computing requirement of the compute operator. An output operator may obtain a processing result of the service based on the computational result and the service data, and send the processing result to a data target end of the service. In this method, the reading operator sends the data required for computing only to the compute operator, thereby decreasing network overheads between the reading operator and the compute operator. In particular, the compute operator receives only the data required for computing and performs state storage based on the data required for computing, thereby decreasing the data amount of the state storage, reducing memory consumption of the state storage, and improving computing performance of the compute operator.

The following describes the data processing method provided in embodiments of this application.

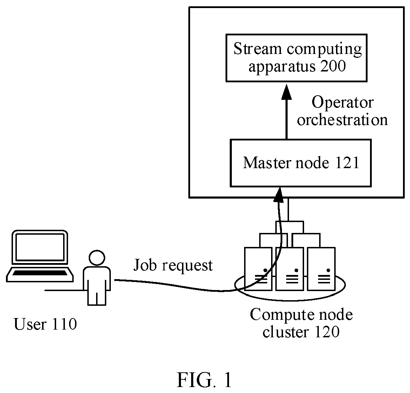

FIG. 1 shows a system architecture that can be used to implement the data processing method provided in embodiments of this application. As shown in FIG. 1, the system architecture includes a user 110 and a compute node cluster 120. The compute node cluster 120 includes a plurality of compute nodes. The compute node may be a physical node, for example, a server. The compute node may alternatively be a virtual compute node, for example, a virtual machine (virtual machine, VM) or a container (container). The user may trigger, through a job request, the compute node cluster 120 to execute a service, for example, a data association service or a data filter service. The data association service is also referred to as an association computing service, and refers to associating or concatenating data in two or more data tables based on an association condition. The data filter service is also referred to as data filter computing, and refers to filtering or screening out, from data, data that meets a preset filter condition.

A master (master) node 121 is deployed in the compute node cluster 120. The master node 121 may be deployed on any one or more compute nodes in the compute node cluster 120. The master node 121 may receive a job request of a service sent by the user 110, and perform operator orchestration based on the job request, to obtain a stream computing apparatus 200. Details are as follows.

The job request may include computing logic information of the service. For example, the job request includes one or more structured query languages (structured query language, SQL). An SQL statement reflects computing logic of the service. The computing logic of the service can be obtained by parsing the SQL statement. In an example, it may be set that the job request includes the following SQL statement:
"Select table1.f1, table1.f2, table1.f3, ..., table2.f2, table2.f3, ... from table1 join table2 on table1.f1=table2.f2"

The SQL statement indicates that an f1 field in a table 1 (table1) and an f2 field in a table 2 (table2) are used as association fields, and the f1 field, an f2 field, an f3 field, and the like in the table 1 are concatenated with the f2 field, an f3 field, and the like in the table 2. The association field may be referred to as a concatenation field or a concatenation key. The fields such as the f2 field and the f3 field in the table 1 and the fields such as the f3 field in the table 2 are to-be-concatenated data. Computing logic included in the SQL is determining whether the f1 field in the table 1 is the same as the f2 field in the table 2. If the f1 field in the table 1 is the same as the f2 field in the table 2, the fields such as the f2 field and the f3 field in the table 1 are concatenated with the fields such as the f3 field in the table 2.

In an example, it may be further set that the job request includes the following SQL statement:
"Select table3.f1, table3.f2, table3.f3, ... from table3 where table3.f1=B10011"

The SQL statement indicates that an f1 field in a table 3 (table3) is used as a filter field, and B10011 is used as a filter condition, to obtain the f1 field, an f2 field, an f3 field, and the like from the table 3 through filtering. Computing logic included in the SQL is determining whether the f1 field in the table 3 is the same as "B10011". If the f1 field in the table 3 is the same as "B10011", the corresponding fields are obtained through filtering and are output. The filter field may be referred to as a filter key, and fields such as the f2 field and the f3 field may be referred to as to-be-filtered data.

In this way, the master node 121 may obtain the computing logic of the service by parsing the SQL statement in the job request.

The master node 121 may perform operator orchestration based on the obtained computing logic of the service, to obtain one or more compute operators like a compute operator 221, a reading operator 210, and an output operator 230. As described above, the computing logic of the service may be obtained by parsing the SQL statement of the service. Therefore, the one or more compute operators like the compute operator 221, the reading operator 210, and the output operator 230 are obtained by performing orchestration based on the SQL statement of the service.

The job request further includes information about a data source end. The master node 121 may configure the reading operator based on the information about the data source end, so that the reading operator can read service data from the data source end. The master node 121 may further configure the obtained computing logic of the service into the reading operator, so that the reading operator can identify, in the service data based on the computing logic of the service, data required by the computing logic of the service, to obtain data required for computing. Details are specifically described in the following method embodiments. Details are not described herein.

The job request further includes information about a data target end. The master node 121 configures the output operator based on the information about the data target end, so that the output operator can output a processing result of the service to the data target end. The master node 121 further configures a capability of the output operator to obtain the processing result of the service based on a computational result of the compute operator and the service data (or data not required for computing in the service data). Details are specifically described in the following method embodiments. Details are not described herein.

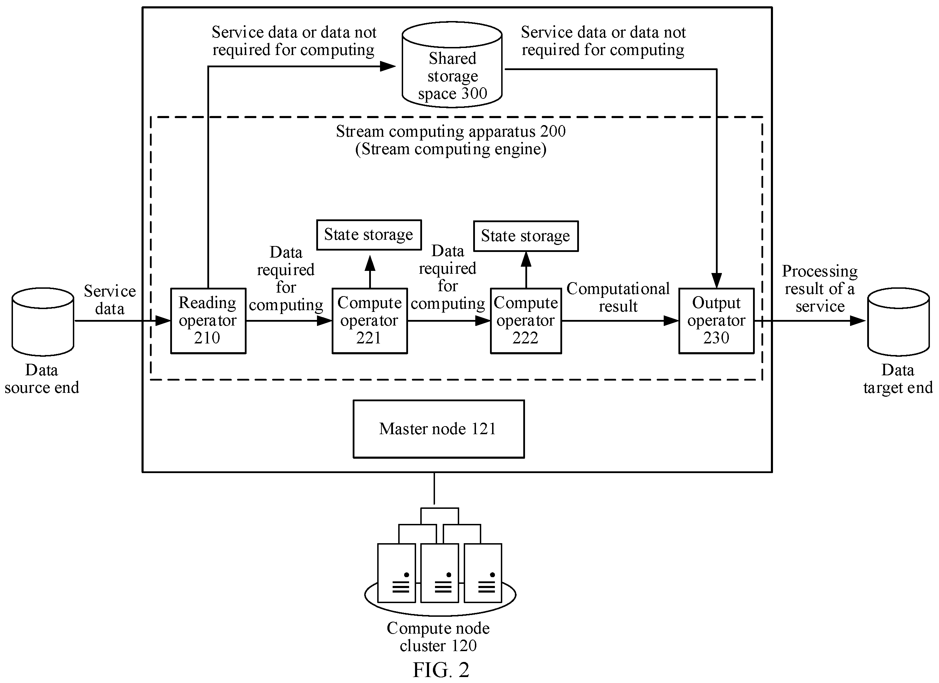

Refer to FIG. 2. A master node 121 may deploy one or more compute operators like a reading operator 210, an output operator 230, and a compute operator 221 in a compute node cluster 120. Different operators such as the reading operator 210, the output operator 230, and the compute operator may be deployed on a same compute node in the compute node cluster 120, or may be deployed on different compute nodes.

The one or more compute operators like the compute operator 221, the reading operator 210, and the output operator 230 that are deployed in the compute node cluster 120 form a stream computing apparatus 200. The stream computing apparatus 200 is also referred to as a stream computing engine, and is configured to process service data in real time. Specifically, the reading operator 210 reads the service data, for example, a data table or one or more rows in the data table, from a data source end. The reading operator 210 identifies, from the read service data based on computing logic of a service, data required by the computing logic of the service, that is, data required for computing. Then, the reading operator 210 inputs the data required for computing into the compute operator 221. The compute operator 221 performs state storage based on the data required for computing, thereby decreasing a scale of the state storage. The data required for computing may meet a computing requirement of the compute operator 221. The compute operator 221 may compute, based on the computing logic carried by the compute operator, the data required for computing, to obtain a computational result. The output operator 230 may obtain a processing result of the service based on the computational result and the service data, and send the processing result to a data target end.

In some embodiments, as shown in FIG. 2, shared storage space 300 of the reading operator 210 and the output operator 230 may be configured in the compute node cluster 120, that is, both the reading operator 210 and the output operator 230 can access the storage space 300. For example, when the reading operator 210 and the output operator 230 are located on a same compute node, the shared storage space 300 may be located on the compute node. For example, when the reading operator 210 and the output operator 230 are located on different compute nodes, the shared storage space 300 may be located on the compute node on which the reading operator 210 is located or the compute node on which the output operator 230 is located. For example, the shared storage space 300 may be located on a compute node other than a compute node on which the reading operator 210 is located and a compute node on which the output operator 230 is located.

In some embodiments, the reading operator 210 may store the read service data in the shared storage space 300. The output operator 230 may obtain the service data from the shared storage space 300, and then the output operator may obtain the processing result of the service based on the service data and the computational result of the compute operator. In some embodiments, the reading operator 210 may use data in the service data other than the data required for computing as data not required for computing, and store the data not required for computing in the shared storage space 300. The output operator 230 may obtain the data not required for computing from the shared storage space 300, and then the output operator may obtain the processing result of the service based on the data not required for computing and the computational result of the compute operator.

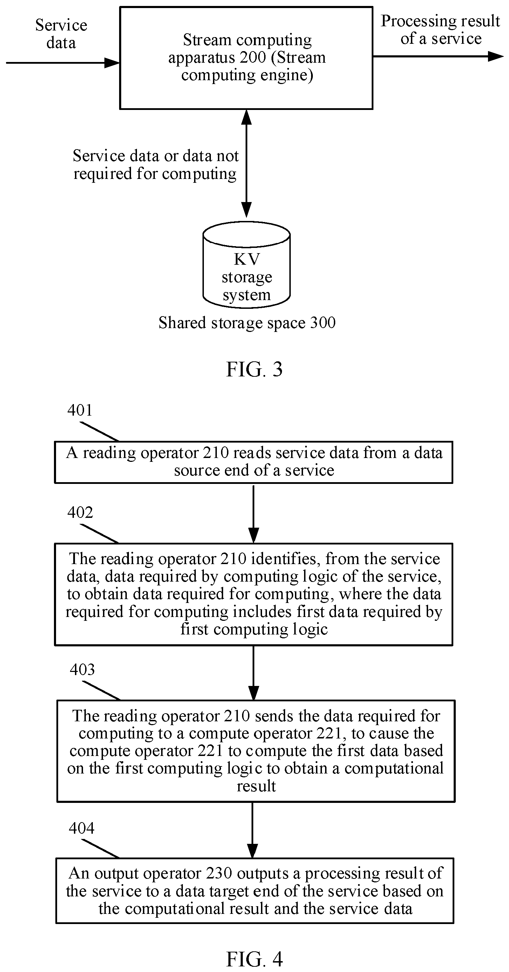

In some embodiments, as shown in FIG. 3, shared storage space 300 may be implemented as a key (key, K) value (value, V) storage system. That is, service data or data not required for computing may be stored in the shared storage space 300 in a form of a KV pair. In an example, the shared storage space 300 may be implemented as an HBase database. In another example, the shared storage space 300 may be implemented as a Redis database.

In some embodiments, a compute operator may perform state storage locally, that is, the compute operator may store data required for computing and a computational result in the operator locally. In some embodiments, a compute operator may access the shared storage space 300. The compute operator may perform state storage in the shared storage space 300, that is, the compute operator may store, in the shared storage space 300, data required for computing and a computational result, to further decrease local storage overheads of the operator.

The foregoing example describes the system architecture and the stream computing apparatus 200 provided in embodiments of this application. The following describes the data processing method provided in embodiments of this application with reference to the system architecture and the stream computing apparatus 200.

The method may be performed by the stream computing apparatus 200, and is specifically performed by the related operators in the stream computing apparatus 200. As shown in FIG. 4, the method includes the following steps.

Step 401: A reading operator 210 reads service data from a data source end of a service.

In some embodiments, the data source end may be a database, and the reading operator 210 may read data from the database to obtain the service data. In some embodiments, the data source end may be a data collection end, that is, the data source end may collect data from a collection object to obtain data. For example, the data source end may be an environment monitoring device, and the environment monitoring device continuously monitors an environment to obtain data. The reading operator 210 may read the data recently collected by the environment monitoring device, to obtain the service data.

In some embodiments, the service data is streaming data, and the streaming data includes a plurality of data points, where each data point includes at least one piece of data. The reading operator 210 reads different data points of the plurality of data points from the data source end at different reading moments.

In some embodiments, there may be a plurality of data source ends, that is, the reading operator 210 may read data from the plurality of data source ends at the same time. For example, in a data association service scenario, the reading operator 210 reads data from a plurality of data tables, to concatenate the data in different data tables.

Step 402: The reading operator 210 identifies, from the service data, data required by computing logic of the service, to obtain data required for computing, where the data required for computing includes first data required by first computing logic.

As described above, the master node 121 may obtain the computing logic of the service by parsing a job request of the service. For example, the job request includes an SQL statement used to execute the service, and the master node 121 parses the SQL statement to obtain the computing logic of the service. The master node 121 may configure the computing logic of the service into the reading operator 210. Therefore, in step 402, the reading operator 210 may identify, based on the computing logic of the service, the data required by the computing logic of the service. For example, for computing logic of determining whether an f1 field in a table 1 is the same as an f2 field in a table 2, the required data is the f1 field in the table 1 and the f2 field in the table 2. For another example, for computing logic of determining whether an f1 field in a table 3 is the same as "B10011", the required data is the f1 field in the table 3.

In addition, the first computing logic belongs to the computing logic of the service, and may be specifically computing logic carried by a compute operator 221. Therefore, the data required for computing obtained in step 402 includes data required by the first computing logic. For ease of description, the data required by the computing logic (the first computing logic) carried by the compute operator 221 is referred to as the first data.

In some embodiments, the service executed by the stream computing apparatus 200 includes concatenating to-be-concatenated data based on concatenation keys of the to-be-concatenated data. In this case, the computing logic carried by the compute operator 221 is determining whether the concatenation keys of the to-be-concatenated data are the same. It may be set that the service data includes to-be-concatenated data C1, a concatenation key C11 corresponding to the to-be-concatenated data C1, to-be-concatenated data C2, and a concatenation key C21 corresponding to the to-be-concatenated data C2. In this case, the computing logic carried by the compute operator 221 includes whether the concatenation key C11 is the same as the concatenation key C21. In step 402, the concatenation key C11 and the concatenation key C21 may be identified as the first data based on the computing logic carried by the compute operator 221.

For example, the SQL statement of the service may be set to "Select table1.f1, table1.f2, table1.f3, ..., table2.f2, table2.f3, ... from table1 join table2 on table1.f1=table2.f2".

In the SQL statement, an f1 field in a table1 and an f2 field in a table2 are concatenation keys, and belong to the data required for computing. Fields such as an f2 field and an f3 field in the table1 and fields such as an f3 field in the table2 may be referred to as the to-be-concatenated data. The f1 field in the table1 may be used as the concatenation key C11, the f2 field in the table2 may be used as the concatenation key C21, the fields such as the f2 field and the f3 field in the table1 may be used as the to-be-concatenated data C1, and the fields such as the f3 field in the table2 may be used as the to-be-concatenated data C2.

In some embodiments, the service executed by the stream computing apparatus 200 includes outputting, to a data target end, data that meets a preset filter condition. The service data includes to-be-filtered data and a filter key corresponding to the to-be-filtered data, and the computing logic carried by the compute operator 221 is determining whether the filter key meets the preset filter condition. In step 402, the filter key may be identified as the first data based on the computing logic carried by the compute operator 221.

For example, the SQL statement of the service may be set to "Select table3.f1, table3.f2, table3.f3, ... from table3 where table3.f1=B10011".

In the SQL statement, an f1 field in a table3 is the filter key, B10011 is the preset filter condition, and fields such as an f2 field and an f3 field in the table3 are the to-be-filtered data.

In some embodiments, as described above, the service data is the streaming data, and the streaming data includes the plurality of data points. The reading operator 210 reads different data points of the plurality of data points from the data source end at different reading moments. In step 402, each time the reading operator 210 reads a data point, the reading operator 210 may determine, based on the computing logic carried by the compute operator 221, whether the data point belongs to the data required for computing or data not required for computing. It may be set that at a moment T1, the reading operator 210 reads a data point T11 from the data source end. The reading operator 210 identifies, based on the computing logic carried by the compute operator 221, that the data point T11 belongs to the data required for computing, and uses the data point T11 as the first data. It may also be set that at a moment T2 after the moment T1, the reading operator 210 reads a data point T21 from the data source end. The reading operator 210 identifies, based on the computing logic carried by the compute operator 221, that the data point T21 is not the data required by the computing logic carried by the compute operator 221.

Step 403: The reading operator 210 sends the data required for computing to the compute operator 221, to cause the compute operator 221 to compute the first data based on the first computing logic to obtain a computational result. The reading operator 210 sends the data required for computing to the compute operator 221, to cause the compute operator 221 to perform state storage based on the data required for computing.

The compute operator 221 may also be referred to as a first compute operator. The reading operator 210 may send the data required for computing obtained in step 402 to the compute operator 221. When receiving the data required for computing, the compute operator 221 may obtain the first data in the data required for computing, and compute the first data based on the computing logic (that is, the first computing logic) carried by the compute operator 221 to obtain the computational result.

In some embodiments, as described above, the computing logic carried by the compute operator 221 is determining whether the concatenation keys of the to-be-concatenated data are the same, and the first data includes the concatenation key C11 and the concatenation key C21. In step 403, the compute operator 221 may determine whether the concatenation key C11 is the same as the concatenation key C21, to obtain the computational result.

In some embodiments, as described above, the computing logic carried by the compute operator 221 is determining whether the filter key meets the preset filter condition, and the first data includes the concatenation key. The filter condition is preset for the compute operator 221. In step 403, the compute operator 221 may determine whether the concatenation key meets the filter condition, to obtain the computational result.

In some embodiments, as described above, the first data may be the data point T11. In step 403, the compute operator 221 may compute the data point T11 based on the first computing logic to obtain the computational result.

The compute operator 221 performs state storage on the received data required for computing and the computational result of the compute operator 221 as a state. In an example, the compute operator 221 may store the state in a local memory. In an example, the compute operator 221 may store the state in the shared storage space 300.

The compute operator 221 receives, from the reading operator 210, the data required for computing, and the data required for computing is a part of the service data read by the reading operator 210 in step 401. That is, compared with a data amount of the service data read by the reading operator 210 in step 401, a data amount of the data required for computing is smaller. The compute operator 221 performs state storage based on the data required for computing, to effectively decrease storage overheads of the state storage. In particular, the state storage is usually performed in the memory. Therefore, decreasing the storage overheads of the state storage can effectively reduce memory space and improve computing performance of the compute operator.

Step 404: The output operator 230 outputs the processing result of the service to the data target end of the service based on the computational result and the service data.

After completing computing of the first data, the compute operator 221 may send the obtained computational result to the output operator 230, to cause the output operator 230 to obtain the computational result.

In some embodiments, the output operator 230 may obtain the service data obtained by the reading operator 210 in step 401. In an example, the reading operator 210 may store the service data obtained in step 401 in shared storage space 300. In step 404, the output operator 230 may obtain the service data from the shared storage space 300.

In some embodiments, the output operator 230 may obtain the data not required for computing from the service data. The data not required for computing refers to data in the service data obtained by the reading operator 210 in step 401 other than the data required for computing. In an example, the reading operator 210 may store the data not required for computing in the shared storage space 300. In step 404, the output operator 230 may obtain the data not required for computing from the shared storage space 300.

The output operator 230 may obtain the processing result of the service based on the computational result and the data not required for computing.

In some embodiments, as described above, the service executed by the stream computing apparatus 200 includes the concatenation keys based on the to-be-concatenated data. In this case, the computing logic carried by the compute operator 221 is determining whether the concatenation keys of the to-be-concatenated data are the same. In step 404, if the computational result indicates that the concatenation key C11 is the same as the concatenation key C21, the output operator 230 concatenates the to-be-concatenated data C1 and the to-be-concatenated data C2 that are obtained from the service data or the data not required for computing, and then the output operator 230 concatenates the to-be-concatenated data C1 and the to-be-concatenated data C2 and outputs an obtained concatenation result. The concatenation result is used as the processing result of the service.

In some embodiments, the service executed by the stream computing apparatus 200 includes outputting, to the data target end, the data that meets the preset filter condition, the computing logic carried by the compute operator 221 is determining whether the filter key meets the preset filter condition, and second data includes to-be-filtered data. In step 404, if the computational result indicates that the filter key meets the filter condition, the output operator 230 obtains the to-be-filtered data from the service data or the data not required for computing, and uses the to-be-filtered data as the processing result of the service.

In some embodiments, as described above, the computational result is a computational result obtained by the compute operator 221 by computing the data point T11, and second data is the data point T21. The shared storage space 300 stores the service data obtained in step 401 or the data not required for computing obtained in step 402, and both the service data and the data not required for computing include the data point T21. Therefore, the output operator 230 may obtain the data point T21 from the shared storage space 300. In step 404, the output operator 230 may obtain the processing result of the service based on the computational result and the data point T21.

When the output operator 230 obtains the processing result of the service, the output operator 230 may output the processing result to the data target end.

In some embodiments, refer to FIG. 2. The stream computing apparatus 200 further includes a compute operator 222. The compute operator 222 may also be referred to as a second compute operator, and is configured to carry second computing logic of the service. That is, the compute operator 222 is configured to perform data computing based on the second computing logic. As shown in FIG. 2, in a data stream direction of the service data, the compute operator 222 is located after the compute operator 221, that is, outflow data of the compute operator 221 is inflow data of the compute operator 222. The data required for computing obtained in step 402 includes data required by the second computing logic. For ease of description, the data required by the second computing logic may be referred to as second data.

In an example of this embodiment, after receiving the data required for computing, the compute operator 221 may identify the second data from the data required for computing, and send the second data to the compute operator 222, to cause the compute operator 222 to perform state storage based on the second data, and the compute operator 222 to compute the second data based on the second computing logic to obtain a computational result. The computational result is used by the output operator 230 to obtain the processing result of the service, and the processing result of the service is sent to the data target end. In an example of this example, the compute operator 221 may identify the data required by the computing logic of the compute operator 222, and send the data required by the computing logic of the compute operator 222 to a current compute operator. In another example of this example, the compute operator 221 may remove the first data from the data required for computing and received by the compute operator 221, to obtain data that includes the second data but does not include the first data. Then, the compute operator 221 sends the data that includes the second data but does not include the first data to the compute operator 222.

In this example, a data amount of the state storage of the compute operator can be further decreased.

In another example of this embodiment, after receiving the data required for computing, the compute operator 221 may send the data required for computing to the compute operator 222, to cause the compute operator 222 to perform state storage based on the data required for computing, and the compute operator 222 to compute the second data based on the second computing logic to obtain the computational result. The computational result is used by the output operator 230 to obtain the processing result of the service, and the processing result of the service is sent to the data target end.

In conclusion, in the data processing method provided in this embodiment of this application, the reading operator may identify the data required for computing from the service data, and then send the data required for computing to the compute operator, to cause the compute operator to perform state storage and perform computing based on the data required for computing. Therefore, this can decrease the data amount of the state storage of the compute operator while meeting a computing requirement of the compute operator, thereby reducing memory consumption of the operator and improving computing performance of the operator.

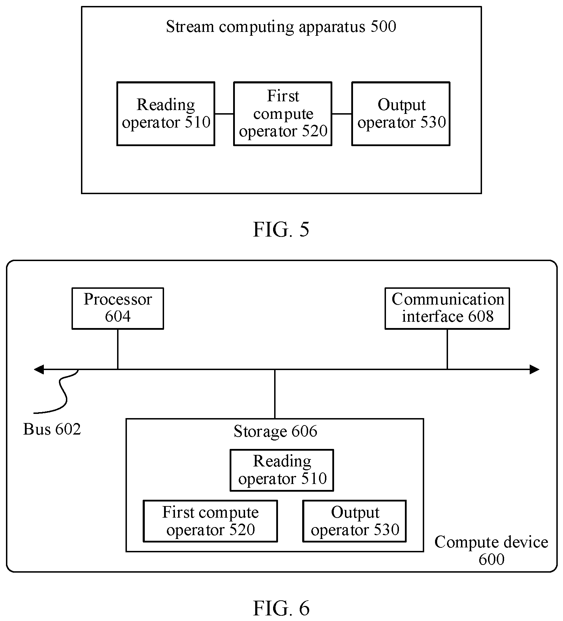

Refer to FIG. 5. An embodiment of this application further provides a stream computing apparatus 500. As shown in FIG. 5, the stream computing apparatus 500 includes a reading operator 510, a first compute operator 520, and an output operator 530, and the first compute operator 520 is configured to perform data computing based on first computing logic of a service. The reading operator 510 is configured to read service data from a data source end of the service. The reading operator 510 is configured to identify, from the service data, data required by computing logic of the service, to obtain data required for computing, where the data required for computing includes first data required by the first computing logic. The reading operator 510 is configured to send the data required for computing to the first compute operator 520, to cause the first compute operator 520 to compute the first data based on the first computing logic to obtain a computational result. The output operator 530 is configured to output a processing result of the service to a data target end of the service based on the computational result and the service data.

In some embodiments, the stream computing apparatus 500 corresponds to storage space that is accessed by the reading operator 510 and the output operator 520. The reading operator 510 is further configured to store data not required for computing into the storage space, where the data not required for computing is data in the service data other than the data required for computing. The output operator 530 is further configured to read the data not required for computing from the storage space. The output operator 530 is further configured to output the processing result to the data target end based on the data not required for computing and the computational result.

In some embodiments, the stream computing apparatus corresponds to storage space that is accessed by the reading operator 510 and the output operator 530. The reading operator 510 is further configured to store the service data into the storage space. The output operator 530 is further configured to read the service data from the storage space.

In some embodiments, the stream computing apparatus 500 includes a second compute operator, the second compute operator is configured to perform data computing based on second computing logic of the service, and in a data stream direction of the service, the second compute operator is located after the first compute operator 520. The data required for computing further includes second data required by the second computing logic, and the first compute operator 520 is configured to send the second data to the second compute operator, to cause the second compute operator to compute the second data based on the second computing logic.

In some embodiments, the service data includes first to-be-concatenated data, a first concatenation key corresponding to the first to-be-concatenated data, second to-be-concatenated data, and a second concatenation key corresponding to the second to-be-concatenated data. The first computing logic includes determining whether the first concatenation key is the same as the second concatenation key. The reading operator 510 is configured to identify, based on the first computing logic, that the first concatenation key and the second concatenation key are the first data. When the computational result indicates that the first concatenation key is the same as the second concatenation key, the output operator 530 is configured to concatenate the first to-be-concatenated data and the second to-be-concatenated data to obtain the processing result.

In some embodiments, the service data includes to-be-filtered data and a filter key corresponding to the to-be-filtered data. The first computing logic includes determining whether the filter key meets a preset filter condition. The reading operator 510 is configured to identify, based on the first computing logic, that the filter key is the first data. When the computational result indicates that the filter key meets the preset filter condition, the output operator 530 is configured to use the to-be-filtered data as the processing result.

In some embodiments, the service data is streaming data including a plurality of data points, and each of the plurality of data points includes at least one piece of data. The reading operator 510 reads different data points of the plurality of data points from the data source end at different moments. The reading operator 510 is configured to read a first data point of the plurality of data points at a first moment. The reading operator 510 is configured to identify, based on the first computing logic, that the first data point is the first data.

In an example of this embodiment, the reading operator 510 is configured to read a second data point of the plurality of data points at a second moment. When the second data point is data other than the data required by the first computing logic, the output operator 530 is configured to output the processing result to the data target end of the service based on the computational result and the second data point.

In some embodiments, the computing logic of the service is obtained based on a structured query language SQL statement of the service.

In some embodiments, the first compute operator 520 is obtained through orchestration based on an SQL statement of the service.

The reading operator 510, the first compute operator 520, and the output operator 530 may be implemented through software, or may be implemented through hardware. For example, the following uses the reading operator 510 as an example to describe an implementation of the reading operator 510. Similarly, for implementations of the first compute operator 520 and the output operator 530, refer to the implementation of the reading operator 510.

A module is used as an example of a software functional unit, and the reading operator 510 may include code run on a compute instance. The compute instance may include at least one of a physical host (a compute device), a virtual machine, and a container. Further, there may be one or more compute instances. For example, the reading operator 510 may include code run on a plurality of hosts/virtual machines/containers. It should be noted that, the plurality of hosts/virtual machines/containers configured to run the code may be distributed in a same region, or may be distributed in different regions. Further, the plurality of hosts/virtual machines/containers configured to run the code may be distributed in a same availability zone AZ, or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same VPC, or may be distributed in a plurality of VPCs. Generally, one VPC is set in one region. A communication gateway needs to be set in each VPC for communication between two VPCs in a same region and cross-region communication between VPCs in different regions. The VPCs are interconnected through the communication gateway.

A module is used as an example of a hardware functional unit, and the reading operator 510 may include at least one compute device, for example, a server. Alternatively, the reading operator 510 may be a device implemented by using an application-specific integrated circuit (application-specific integrated circuit, ASIC) or a programmable logic device (programmable logic device, PLD). The PLD may be implemented by a complex programmable logic device (complex programmable logic device, CPLD), a field-programmable gate array (field-programmable gate array, FPGA), generic array logic (generic array logic, GAL), or any combination thereof.

A plurality of compute devices included in the reading operator 510 may be distributed in a same region, or may be distributed in different regions. The plurality of compute devices included in the reading operator 510 may be distributed in a same AZ, or may be distributed in different AZs. Similarly, the plurality of compute devices included in the reading operator 510 may be distributed in a same VPC, or may be distributed in a plurality of VPCs. The plurality of compute devices may be any combination of compute devices such as a server, an ASIC, a PLD, a CPLD, an FPGA, and a GAL.

This application further provides a compute device 600. As shown in FIG. 6, the compute device 600 includes a bus 602, a processor 604, a storage 606, and a communication interface 608. The processor 604, the storage 606, and the communication interface 608 communicate with each other through the bus 602. The compute device 600 may be a server or a terminal device. It should be understood that quantities of processors and storages in the compute device 600 are not limited in this application.

The bus 602 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented through only one line in FIG. 6. However, it does not indicate that there is only one bus or only one type of bus. The bus 602 may include a path for transmitting information between components (such as the storage 606, the processor 604, and the communication interface 608) of the compute device 600.

The processor 604 may include any one or more of processors such as a central processing unit (central processing unit, CPU), a graphics processing unit (graphics processing unit, GPU), a microprocessor (microprocessor, MP), or a digital signal processor (digital signal processor, DSP).

The storage 606 may include a volatile memory (volatile memory), for example, a random access memory (random access memory, RAM). The storage 606 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 606 stores executable program code, and the processor 604 executes the executable program code to separately implement functions of the reading operator 510, the first compute operator 520, and the output operator 530, to implement the method shown in FIG. 4. In other words, the storage 606 stores instructions used to perform the method shown in FIG. 4.

The communication interface 608 implements communication between the compute device 600 and another device or a communication network through a transceiver module, for example, but not limited to, a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

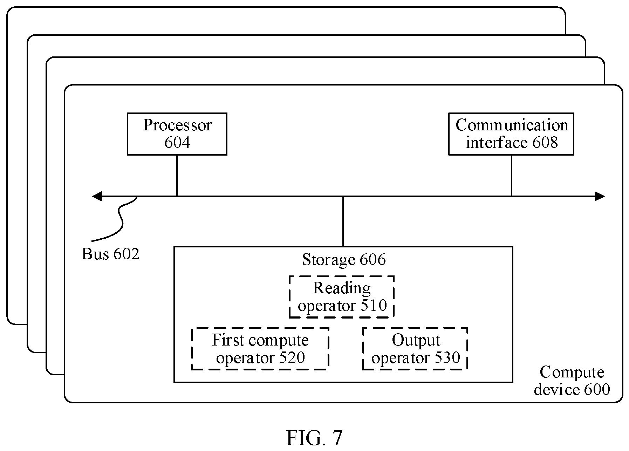

As shown in FIG. 7, the compute device cluster includes at least one compute device 600. A storage 606 in one or more compute devices 600 in the compute device cluster may store same instructions used to perform the method shown in FIG. 4.

In some possible implementations, the storage 606 in the one or more compute devices 600 in the compute device cluster may alternatively separately store some instructions used to perform the method shown in FIG. 4. In other words, a combination of the one or more compute devices 600 may jointly execute the instructions used to perform the method shown in FIG. 4.

It should be noted that storages 606 in different compute devices 600 in the compute device cluster may store different instructions, and the different instructions are respectively used to perform some functions of the stream computing apparatus 500. That is, the instructions stored in the storages 606 in different compute devices 600 may implement functions of one or more modules of the reading operator 510, the first compute operator 520, and the output operator 530.

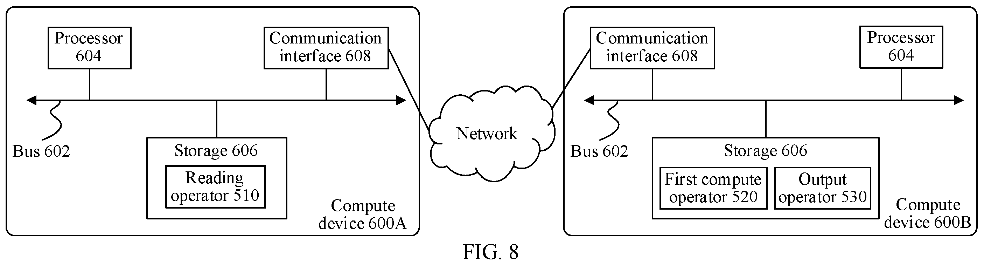

In some possible implementations, the one or more compute devices in the compute device cluster may be connected through a network. The network may be a wide area network, a local area network, or the like. FIG. 8 shows a possible implementation. As shown in FIG. 8, two compute devices 600A and 600B are connected through a network. Specifically, each compute device is connected to the network through a communication interface in the compute device. In this possible implementation, a storage 606 in the compute device 600A stores instructions for executing a function of the reading operator 510. In addition, a storage 606 in the compute device 600B stores instructions for executing functions of the first compute operator 520 and the output operator 530.

It should be understood that, a function of the compute device 600A shown in FIG. 8 may alternatively be completed by a plurality of compute devices 600. Similarly, a function of the compute device 600B may alternatively be completed by a plurality of compute devices 600.

An embodiment of this application further provides another compute device cluster. For a connection relationship between compute devices in the compute device cluster, refer to the connection manners in the compute device cluster in FIG. 7 and FIG. 8 similarly. A difference lies in that a storage 606 in one or more compute devices 600 in the compute device cluster may store same instructions used to perform the method shown in FIG. 4.

In some possible implementations, the storage 606 in the one or more compute devices 600 in the compute device cluster may alternatively separately store some instructions used to perform the method shown in FIG. 4. In other words, a combination of the one or more compute devices 600 may jointly execute the instructions used to perform the method shown in FIG. 4.

An embodiment of this application further provides a computer program product including instructions. The computer program product may be software or a program product that includes instructions and that can be run on a compute device or can be stored in any usable medium. When the computer program product is run on at least one compute device, the at least one compute device is caused to perform the method shown in FIG. 4.

An embodiment of this application further provides a computer-readable storage medium. The computer-readable storage medium may be any usable medium that can be stored by a compute device, or a host migration device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions indicate a compute device to perform the method shown in FIG. 4.

Finally, it should be noted that the foregoing embodiments are merely intended for describing the technical solutions of this application but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof. However, these modifications or replacements do not make the essence of the corresponding technical solutions depart from the protection scope of the technical solutions of embodiments of this application.

## Claims

1. A data processing method, wherein the method is applied to a stream computing apparatus, the stream computing apparatus comprises a reading operator, a first compute operator, and an output operator, and the first compute operator is configured to perform data computing based on first computing logic of a service; and the method comprises:
reading, by the reading operator, service data from a data source end of the service;
identifying, by the reading operator from the service data, data required by computing logic of the service, to obtain data required for computing, wherein the data required for computing comprises first data required by the first computing logic;
sending, by the reading operator, the data required for computing to the first compute operator, to cause the first compute operator to compute the first data based on the first computing logic to obtain a computational result; and
outputting, by the output operator, a processing result of the service to a data target end of the service based on the computational result and the service data.

2. The method according to claim 1, wherein the stream computing apparatus corresponds to storage space that is accessed by the reading operator and the output operator; and
the method further comprises:
storing, by the reading operator, data not required for computing into the storage space, wherein the data not required for computing is data in the service data other than the data required for computing;
reading, by the output operator, the data not required for computing from the storage space; and
outputting, by the output operator, the processing result of the service to the data target end based on the computational result and the service data comprises: outputting, by the output operator, the processing result to the data target end based on the data not required for computing and the computational result.

3. The method according to claim 1, wherein the stream computing apparatus corresponds to storage space that is accessed by the reading operator and the output operator; and
the method further comprises:
storing, by the reading operator, the service data into the storage space; and
reading, by the output operator, the service data from the storage space.

4. The method according to any one of claims 1 to 3, wherein the stream computing apparatus comprises a second compute operator, the second compute operator is configured to perform data computing based on second computing logic of the service, and in a data stream direction of the service, the second compute operator is located after the first compute operator; and
the data required for computing further comprises second data required by the second computing logic, and the first compute operator is configured to send the second data to the second compute operator, to cause the second compute operator to compute the second data based on the second computing logic.

5. The method according to any one of claims 1 to 4, wherein the service data comprises first to-be-concatenated data, a first concatenation key corresponding to the first to-be-concatenated data, second to-be-concatenated data, and a second concatenation key corresponding to the second to-be-concatenated data, and the first computing logic comprises determining whether the first concatenation key is the same as the second concatenation key;
identifying, by the reading operator from the service data, the data required by the computing logic of the service, to obtain the data required for computing comprises: identifying, by the reading operator based on the first computing logic, that the first concatenation key and the second concatenation key are the first data; and
outputting, by the output operator, the processing result of the service to the data target end of the service based on the computational result and the service data comprises:
when the computational result indicates that the first concatenation key is the same as the second concatenation key, concatenating, by the output operator, the first to-be-concatenated data and the second to-be-concatenated data to obtain the processing result.

6. The method according to any one of claims 1 to 4, wherein the service data comprises to-be-filtered data and a filter key corresponding to the to-be-filtered data, and the first computing logic comprises determining whether the filter key meets a preset filter condition;
identifying, by the reading operator from the service data, the data required by the computing logic of the service, to obtain the data required for computing comprises: identifying, by the reading operator based on the first computing logic, that the filter key is the first data; and
outputting, by the output operator, the processing result of the service to the data target end of the service based on the computational result and the service data comprises: when the computational result indicates that the filter key meets the preset filter condition, using, by the output operator, the to-be-filtered data as the processing result.

7. The method according to any one of claims 1 to 6, wherein the service data is streaming data comprising a plurality of data points, each of the plurality of data points comprises at least one piece of data, and the reading operator reads different data points of the plurality of data points from the data source end at different moments;
reading, by the reading operator, the service data from the data source end of the service comprises: reading, by the reading operator, a first data point of the plurality of data points at a first moment; and
identifying, by the reading operator from the service data, the data required by the computing logic of the service, to obtain the data required for computing comprises: identifying, by the reading operator based on the first computing logic, that the first data point is the first data.

8. The method according to claim 7, wherein
reading, by the reading operator, the service data from the data source end of the service comprises: reading, by the reading operator, a second data point of the plurality of data points at a second moment; and
outputting, by the output operator, the processing result of the service to the data target end of the service based on the computational result and the service data comprises: when the second data point is data other than the data required by the first computing logic, outputting, by the output operator, the processing result to the data target end of the service based on the computational result and the second data point.

9. A stream computing apparatus, wherein the apparatus comprises a reading operator, a first compute operator, and an output operator, and the first compute operator is configured to perform data computing based on first computing logic of a service;
the reading operator is configured to read service data from a data source end of the service;
the reading operator is configured to identify, from the service data, data required by computing logic of the service, to obtain data required for computing, wherein the data required for computing comprises first data required by the first computing logic;
the reading operator is configured to send the data required for computing to the first compute operator, to cause the first compute operator to compute the first data based on the first computing logic to obtain a computational result; and
the output operator is configured to output a processing result of the service to a data target end of the service based on the computational result and the service data.

10. The apparatus according to claim 9, wherein the apparatus corresponds to storage space that is accessed by the reading operator and the output operator;
the reading operator is further configured to store data not required for computing into the storage space, wherein the data not required for computing is data in the service data other than the data required for computing;
the output operator is further configured to read the data not required for computing from the storage space; and
the output operator is further configured to output the processing result to the data target end based on the data not required for computing and the computational result.

11. The apparatus according to claim 9, wherein the apparatus corresponds to storage space that is accessed by the reading operator and the output operator;
the reading operator is further configured to store the service data into the storage space; and
the output operator is further configured to read the service data from the storage space.

12. The apparatus according to any one of claims 9 to 11, wherein the apparatus comprises a second compute operator, the second compute operator is configured to perform data computing based on second computing logic of the service, and in a data stream direction of the service, the second compute operator is located after the first compute operator; and
the data required for computing further comprises second data required by the second computing logic, and the first compute operator is configured to send the second data to the second compute operator, to cause the second compute operator to compute the second data based on the second computing logic.

13. The apparatus according to any one of claims 9 to 12, wherein the service data comprises first to-be-concatenated data, a first concatenation key corresponding to the first to-be-concatenated data, second to-be-concatenated data, and a second concatenation key corresponding to the second to-be-concatenated data, and the first computing logic comprises determining whether the first concatenation key is the same as the second concatenation key;
the reading operator is configured to identify, based on the first computing logic, that the first concatenation key and the second concatenation key are the first data; and
when the computational result indicates that the first concatenation key is the same as the second concatenation key, the output operator is configured to concatenate the first to-be-concatenated data and the second to-be-concatenated data to obtain the processing result.

14. The apparatus according to any one of claims 8 to 12, wherein the service data comprises to-be-filtered data and a filter key corresponding to the to-be-filtered data, and the first computing logic comprises determining whether the filter key meets a preset filter condition;
the reading operator is configured to identify, based on the first computing logic, that the filter key is the first data; and
when the computational result indicates that the filter key meets the preset filter condition, the output operator is configured to use the to-be-filtered data as the processing result.

15. The apparatus according to any one of claims 8 to 14, wherein the service data is streaming data comprising a plurality of data points, each of the plurality of data points comprises at least one piece of data, and the reading operator reads different data points of the plurality of data points from the data source end at different moments;
the reading operator is configured to read a first data point of the plurality of data points at a first moment; and
the reading operator is configured to identify, based on the first computing logic, that the first data point is the first data.

16. The apparatus according to claim 15, wherein
the reading operator is configured to read a second data point of the plurality of data points at a second moment; and
when the second data point is data other than the data required by the first computing logic, the output operator is configured to output the processing result to the data target end of the service based on the computational result and the second data point.

17. A compute device cluster, comprising at least one compute device, wherein each compute device comprises a processor and a storage; and
a processor of the at least one compute device is configured to execute instructions stored in a storage of the at least one compute device, to cause the compute device cluster to perform the method according to any one of claims 1 to 8.

18. A computer-readable storage medium, comprising computer program instructions, wherein when the computer program instructions are executed by a compute device cluster, the compute device cluster performs the method according to any one of claims 1 to 8.

19. A computer program product comprising instructions, wherein when the instructions are executed by a computer device cluster, the computer device cluster is caused to perform the method according to any one of claims 1 to 8.
